# EUROPÄISCHE PATENTSCHRIFT

(11) **EP 2 088 015 B1**
(45) Veröffentlichungstag und Bekanntmachung des Hinweises auf die Patenterteilung: **11.04.2012**
(21) Anmeldenummer: 08021264.0
(22) Anmeldetag: 08.12.2008
(51) Int. Cl.: B60H 1/32, B60H 3/06

(54) **Deckel-Gehäuse-Anordnung, insbesondere für einen Filter eines Fahrzeug-Beluftungsysteme**
Lid casing assembly, in particular for a filter of a motor vehicle ventilation system
Agencement de boîtier à couvercle, notamment pour un filtre d'un système d'aération de véhicule

(30) Priorität: 06.02.2008 DE 102008007915
(43) Veröffentlichungstag der Anmeldung: 12.08.2009
(73) Patentinhaber: Behr GmbH & Co. KG, 70469 Stuttgart (DE)
(72) Erfinder: Lindauer, Sascha, 73553 Alfdorf (DE); Litwing, Erich, 73565 Spraitbach (DE)
(74) Vertreter: Grauel, Andreas

(56) Entgegenhaltungen:
- DE-A1- 3 228 440
- DE-A1- 3 611 009
- US-A1- 2007 238 406

## Beschreibung

Die Erfindung betrifft eine Deckel-Gehäuse-Anordnung, insbesondere für einen Filter eines Fahrzeug-Belüftungssystems, gemäß dem Oberbegriff des Anspruches 1.

Zur Abdichtung eines an einem Gehäuse angebrachten Deckels, insbesondere bei einem Fahrzeug-Belüftungs- und -Klimatisierungssystems mit einem unterhalb eines Luftführungsgehäuses angeordneten und gegenüber dem Luftführungsgehäuse abzudichtenden Filterdeckels, sind üblicherweise eingelegte Dichtelemente vorgesehen. Wasser, das am Filter abgeschieden wird, kann über einen am Filterdeckel vorgesehenen Ablaufstutzen nach außerhalb des Luftführungsgehäuses abgeleitet werden, beispielsweise in einen Kondenswasserablauf eines im Strömungsweg der Luft nachfolgend angeordneten Verdampfers. Ferner sind für eine verlässliche Abdichtung Dichtmassen erforderlich, welche relativ teuer sind und die Fertigung erschweren.

DE 32 28 440 A1 zeigt eine Anordnung gemäß Oberbegriff des Anspruchs 1.

Es ist Aufgabe der Erfindung, eine verbesserte Deckel-Gehäuse-Anordnung zur Verfügung zu stellen.

Diese Aufgabe wird gelöst durch eine Deckel-Gehäuse-Anordnung mit den Merkmalen des Anspruches 1. Vorteilhafte Ausgestaltungen sind Gegenstand der Unteransprüche.

Erfingdungsgemäß ist eine Deckel-Gehäuse-Anordnung mit einem Gehäuse sowie einem am Gehäuse angebrachten Deckel vorgesehen, bei der aus dem Inneren des Gehäuses über den Deckel ein Medium, insbesondere sich sammelndes Wasser, abführbar ist, und der Deckel gegenüber dem Gehäuse in einem Dichtungsbereich abgedichtet ist, wobei der Dichtungsbereich räumlich getrennt vom Übertrittsbereich des Mediums vom Gehäuse in den Deckel angeordnet ist. In Folge einer räumlichen Trennung von Dichtungsbereich und Übertrittsbereich kann der Dichtungsbereich in einen Bereich verlagert werden, in welchem kein oder nur wenig Medium strömt, so dass die Abdichtung in Folge einer geringeren Aussetzung an das Medium, dessen Austritt in diesem Bereich verhindert werden soll, einfacher wird. Dichtmassen sind bei einer derartigen Ausgestaltung nicht erforderlich. Der Übertrittsbereich ist durch einen durchgehenden Spalt ausgebildet. Der Dichtungsbereich kann auf an sich bekannte Weise ausgebildet sein, wobei bevorzugt kein Dichtelement zwischen den Dichtflächen des Gehäuses und des Deckels angeordnet ist. Besonders bevorzugt ist der Dichtbereich durch eine Nut-Feder-Verbindung gebildet. Wesentlich ist jedoch, dass Übertrittsbereich und Dichtungsbereich räumlich voneinander beabstandet sind.

Erfindungsgemäß ist am Deckel ein das Medium weiterleitender, rinnenartiger Bereich ausgebildet, dessen Außenrand am Gehäuse anliegt und in Verbindung mit dem Gehäuse den Dichtungsbereich bildet, und dessen innenseitige Wandfläche zumindest bereichsweise mit einem Spalt beabstandet zum Gehäuse angeordnet ist, wobei der Spalt den Übertrittsbereich für das Medium aus dem Gehäuse in den weiterleitenden, rinnenartigen Bereich bildet.

Das Gehäuse weist bevorzugt einen Randbereich auf, der an den Dichtungsbereich angrenzt, den rinnenartigen Bereich teilweise abdeckt und dessen Ende eine Seite des Spalts bildet. Durch das Vorsehen eines Randbereichs, welcher den rinnenartigen Bereich teilweise abdeckt, kann auch sich im Gehäuse an der Gehäuseaußenwand sammelndes Kondenswasser ohne in Kontakt mit dem Dichtungsbereich zu gelangen, über den Übertrittsbereich in den rinnenartigen Bereich des Deckels gelangen und nach außen abgeführt werden. Um das Abführen des Kondenswassers aus dem Gehäuse zu beschleunigen, kann der Randbereich leicht schräg nach unten verlaufen, so dass das Randende unterhalb des Dichtungsbereichs angeordnet ist.

Um ein sicheres Abführen des aus dem Gehäuse kommenden Mediums sicherzustellen, weist der rinnenartige Bereich ein leichtes Gefälle in Richtung eines Ablaufs auf.

Die Deckel-Gehäuse-Anordnung nimmt bevorzugt mindestens einen Filter auf, welcher im Gehäuse angeordnet ist, das von unten her mit dem Deckel verschlossen ist, wobei der Filter mit seiner Unterseite auf dem Deckel sitzt.

Bevorzugt weist der Deckel eine leichte Vertiefung im Bereich des Filters auf, wobei ein rippenartiger Vorsprung die Vertiefung bezüglich eines rinnenartigen Bereichs abgrenzt, und der rippenartige Vorsprung einem Randbereich des Gehäuses mit einem Spalt beabstandet gegenüberliegt, wobei außenseitig des Gehäuses unterhalb des Spalts der rinnenartige Bereich angeordnet ist. Dies ermöglicht einen direkten Übergang des Mediums vom Gehäuse in den rinnenartigen Bereich des Deckels, ohne dass ein Dichtungsbereich vom Medium überströmt werden muss. Um sich weiter innen sammelndes Medium abführen zu können, können im Deckel entsprechende ableitende Strukturen in Richtung des Übertrittsbereichs ausgebildet sein.

Der Filter ist besonders bevorzugt von der Außenseite her von Luft durchströmbar, wobei der Übertrittsbereich in unmittelbarer Nähe der äußeren unteren Filterkante angeordnet ist. Somit sammelt sich das Medium insbesondere an der Außenseite und lässt sich einfach über einen Spalt (Übertrittsbereich) oder mindestens einen Durchbruch nach außen in den rinnenartigen Bereich abführen, wobei die Innenwand des rinnenartigen Bereichs vom Medium überströmt wird. Der vom Übertrittsbereich beabstandete Dichtungsbereich, welcher auf der Außenseite des rinnenartigen Bereichs angeordnet ist, kommt bei dieser Ausgestaltung nicht in Kontakt mit dem abzuführenden Medium.

Eine derartige erfindungsgemäße Deckel-Gehäuse-Anordnung wird vorzugsweise für Fahrzeug-Belüftungssysteme im Bereich des mindestens einen Filter aufnehmenden Gehäuses verwendet, welches von unten her mit dem Deckel verschlossen ist. Das sich im Gehäuse insbesondere am Filter sammelnde Wasser, wobei es sich insbesondere um Spritzwasser, Regenwasser, geschmolzene Schneeflocken oder auch um Kondenswasser handeln kann, kann durch den Übertrittsbereich, der beabstandet vom Dichtungsbereich angeordnet ist, einfach über einen am Deckel ausgebildeten Austritt nach außen abgeführt werden. Die Verwendung einer derartigen Deckel-Gehäuse-Anordnung ist jedoch auch für andere Anwendungsfälle möglich.

Im Folgenden wird die Erfindung anhand eines Ausführungsbeispiels unter Bezugnahme auf die Zeichnung im Einzelnen erläutert. Es zeigen:
- Fig. 1: eine perspektivische Ansicht eines aufgerissen dargestell- ten Gehäuses mit zwei Laufrädern, zwei Filtern und einem unten angeordneten Deckel gemäß dem Ausführungsbei- spiel,
- Fig. 2: eine perspektivische, explosionsartige, geschnittene Dar stellung des Gehäuses samt Filter und Deckel von Fig. 1,
- Fig. 3: einen Schnitt quer durch das Gehäuse samt Filter und Deckel von Fig. 1,
- Fig. 4: eine Detailansicht eines Bereichs von Fig. 3,
- Fig. 5: eine perspektivische Draufsicht auf den Deckel des Ge- häuses von Fig. 1, und
- Fig. 6: eine ausschnittsweise Darstellung einer Variante des Aus- führungsbeispiels in einer Fig. 5 entsprechenden Darstel- lung.

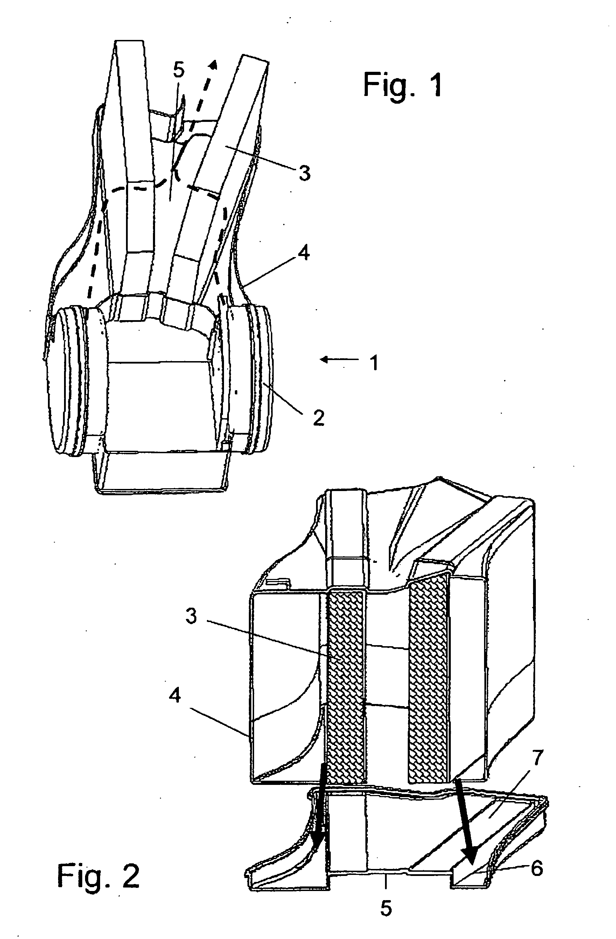

Ein Gebläse 1 für ein Belüftungs- und Klimatisierungssystem eines Fahrzeugs, aufweisend zwei in Fig. 1 nur angedeutet dargestellte Laufräder 2, sowie zwei nachfolgend angeordnete Filter 3 sind in einem Luftführungsgehäuse 4 angeordnet, wobei das Gehäuse 4 im Bereich der Filter 3 im in das Fahrzeug eingebauten Zustand von unten durch einen lösbar angebrachten Deckel 5 verschlossen ist. Hierbei bilden der Deckel 5 in Verbindung mit dem Gehäuse 4 eine erfindungsgemäße Deckel-Gehäuse-Anordnung, durch welche eine verbesserte Abdichtung des Gehäuses 4 erfolgt. Der Strömungsweg der Luft ausgehend von den Laufrädern 2 durch die Filter 3 ist in Fig. 1 durch gestrichelte Linien dargestellt. Die vom Gebläse 1 kommende Luft lädt in den Filtern 3 Schmutz und mitgeführte Feuchtigkeit ab, wie bspw. aus der Umgebung angesaugte Schneeflocken oder Regentropfen, jedoch kann sich an den Filtern 3 auch etwas Kondenswasser bilden. Das Wasser fließt in Folge der Schwerkraft insbesondere auf der Luftanströmseite, also auf der Außenseite, in einem Zwischenraum zwischen dem Filter 3 und dem Gehäuse 4 nach unten in Richtung Deckel 5.

Um das sich im unteren Bereich der Filter 3 sammelnde Wasser nach außerhalb des Gehäuses 4 oder zumindest aus dem Bereich, in welchem die Luft strömt, abzuführen, weist der im betriebsbereiten Zustand der Deckel-Gehäuse-Anordnung unten angeordnete Deckel 5 außen umlaufende vertiefte, rinnenartige Bereiche 6 mit vorliegend rechteckförmigen Querschnitten auf, die im in ein Fahrzeug eingebauten Zustand der Deckel-Gehäuse-Anordnung ein leichtes Gefälle aufweisen, so dass das gesamte Wasser zu einem Ablauf 6' an einer Ecke des Deckels 5 fließt. Die rinnenartigen Bereiche können jedoch auch einen beliebigen anderen geeigneten Querschnitt aufweisen. Das Abführen des Wassers wird vorliegend dadurch unterstützt, dass die Filter 3 von außen her angeströmt werden, so dass sich das meiste Wasser direkt auf der Außenseite, also in der Nähe des umlaufenden rinnenartigen Bereichs 6, sammelt.

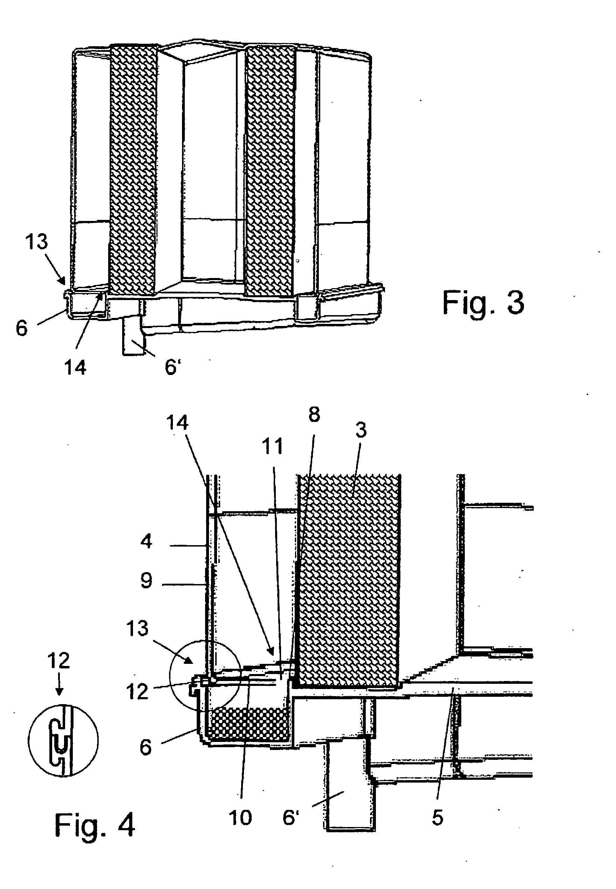

Für eine positionierte Aufnahme der Filter 3 sind leichte Vertiefungen 7 im Deckel 5 ausgebildet, wobei zwischen einer Vertiefung 7 und dem rinnenar tigen Bereich 6 ein kleiner rippenartiger Vorsprung 8 angeordnet ist, welcher in direkter Anlage an die Luftanströmseite des entsprechenden Filter 3 ist, so dass das sich am Filter 3 sammelnde direkt über diesen rippenartigen Vorsprung 8 in den rinnenartigen Bereich 6 fließen kann. Der zwischen den Filtern 3 angeordnete Bereich des Deckels 5 ragt etwas in Richtung Gehäuse 4, so dass sich in diesem Bereich sammelndes Wasser in die Vertiefungen 7 und anschließend in den rinnenartigen Bereich 6 gelangt, in welchem es sich - je nach Menge - leicht aufstauen kann, wie in Fig. 4 angedeutet.

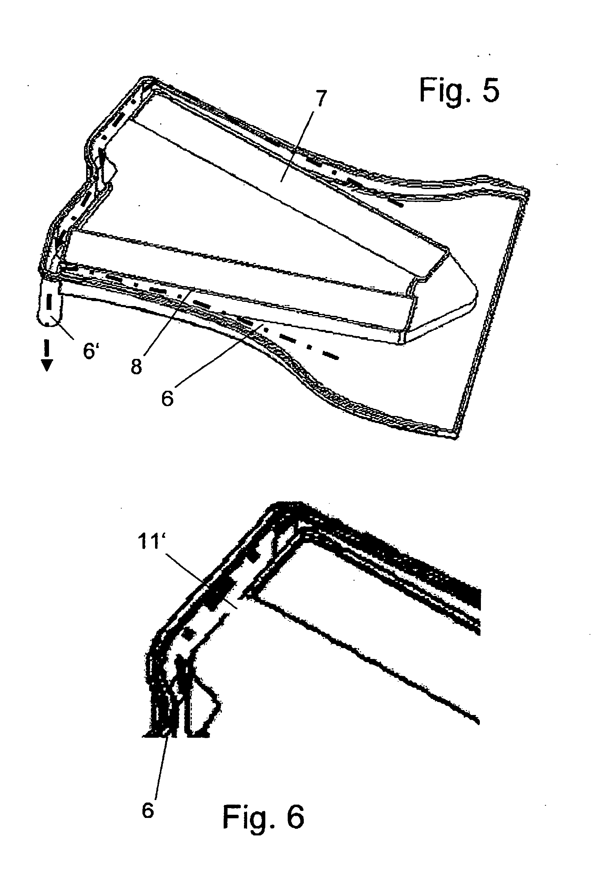

Das Gehäuse 4 weist, wie aus Fig. 2 ersichtlich, im unteren Bereich einen im Wesentlichen parallel zur Filterfläche verlaufenden Bereich 9, welcher die Leitfläche für die den Filter 3 anströmende Luft bildet, und einem im Wesentlichen senkrecht hierzu angeordneten Randbereich 10 am unteren Ende des Gehäuses 4 auf, welcher vorliegend senkrecht zum benachbarten Bereich 9 angeordnet ist und die Leitfläche der Luft endseitig begrenzt. Alternativ kann der Randbereich auch mit Gefälle in Richtung Filter angeordnet sein. Der Randbereich 10 läuft auf die untere luftanströmseitige Kante des Filters 3 zu und verläuft im zusammengebauten Zustand der Deckel-Gehäuse-Anordnung im Wesentlichen parallel zum Boden des rinnenartigen Bereichs 6 des Deckels 5, endet jedoch mit einem Spalt 11 zum Filter 3. An Stelle eines Spalts können auch einzelne Durchbrüche 11' vorgesehen sein, wie in Fig. 6 in einer ausschnittsweisen Variante des Ausführungsbeispiels angedeutet. Das filterseittige Ende des Randbereichs 10 liegt im zusammengebauten Zustand der Deckel-Gehäuse-Anordnung dem rippenartigen Vorsprung 8 mit leichtem Abstand gegenüber, welcher ein Durchströmen des Wassers nicht behindert, jedoch auch keinen wesentlichen Einfluss auf die den Filter 3 anströmende Luft hat, d.h. eine Trennwand ist zwischen dem Luftführungsbereich des Gehäuses 4 und dem das Wasser ableitenden, rinnenartigen Bereich 6 des Deckels vorgesehen. Die Abdichtung der Deckel-Gehäuse-Anordnung erfolgt am Außenrand des rinnenartigen Bereichs 6, welcher etwas hochgezogen und in Anlage an den im Wesentlichen parallel zur Filterfläche verlaufenden Bereich 9 ist, also beabstandet von dem Übertrittsbereich (Spalt 11) des Wassers vom Gehäuse 4 in den Deckel 5. Hierbei ist der Außenrand des rinnenartigen Bereichs 6 mit einem umlaufenden Dichtsystem 12 versehen, welches vorliegend ohne zusätzliche einzulegende Dichtelemente auskommt. Beim Dichtungssystem 12 handelt es sich vorliegend um eine Nut-Feder-Verbindung, welche ausreichend dicht ist und auf der linken Seite der Fig.4 im Detail dargestellt ist.

Auf Grund der oben beschriebenen Ausgestaltung der Deckel-Gehäuse-Anordnung sind der Dichtungsbereich, in der Zeichnung mit dem Bezugzeichen 13 bezeichnet, und der Übertrittsbereich, in der Zeichnung mit dem Bezugszeichen 14 bezeichnet, räumlich getrennt voneinander ausgebildet. Der rinnenartige Bereich 6 ist zudem derart dimensioniert, dass - auch im Falle des maximal zu erwartenden Anfallens von Wasser - der Dichtungsbereich 13 etwas beabstandet vom maximalen Wasserstand im rinnenartigen Bereich 6 ist, so dass der Dichtungsbereich 13 nur kurzfristig und bereichsweise in Kontakt mit Wasser gelangt.

## Patentansprüche

1. Deckel-Gehäuse-Anordnung mit einem Gehäuse (4) sowie einem am Gehäuse angebrachten Deckel (5), bei der aus dem Inneren des Gehäuses (4) über den Deckel (5) ein Medium abführbar ist, und der Deckel (5) gegenüber dem Gehäuse (4) in einem Dichtungsbereich (13) abgedichtet ist, wobei der Dichtungsbereich (13) räumlich getrennt vom Übertrittsbereich (14) des Mediums vom Gehäuse (4) in den Deckel (5) angeordnet ist, **dadurch gekennzeichnet, dass**
am Deckel (5) ein das Medium weiterleitender, rinnenartiger Bereich (6) ausgebildet ist, dessen Außenrand am Gehäuse (4) anliegt und in Verbindung mit dem Gehäuse (4) den Dichtungsbereich (13) bildet, und dessen innenseitige Wandfläche mit einem Spalt (11) beabstandet zum Gehäuse (4) angeordnet ist, wobei der Spalt (11) den Übertrittsbereich (14) für das Medium aus dem Gehäuse (4) in den weiterleitenden, rinnenartigen Bereich (6) bildet.

2. Deckel-Gehäuse-Anordnung nach Anspruch 1, **dadurch gekennzeichnet, dass** das Gehäuse (4) einen Randbereich (10) aufweist, der an den Dichtungsbereich (13) angrenzt, den rinnenartigen Bereich (6) teilweise abdeckt und dessen Ende eine Seite des Spalts (11) bildet.

3. Deckel-Gehäuse-Anordnung nach Anspruch 1 oder 2, **dadurch gekennzeichnet, dass** der rinnenartige Bereich (6) ein leichtes Gefälle in Richtung eines Ablaufs (6') aufweist.

4. Deckel-Gehäuse-Anordnung nach einem der vorhergehenden Ansprüche, **dadurch gekennzeichnet, dass** die Deckel-Gehäuse-Anordnung mindestens einen Filter (3) aufnimmt, welcher im Gehäuse (4) angeordnet ist, das von unten her mit dem Deckel (5) verschlossen ist, wobei der Filter (3) mit einer Fläche auf dem Deckel (5) sitzt.

5. Deckel-Gehäuse-Anordnung nach Anspruch 4, **dadurch gekennzeichnet, dass** der Deckel (5) eine leichte Vertiefung (7) im Bereich des Filters (3) aufweist, wobei ein rippenartiger Vorsprung (8) die Vertiefung (7) bezüglich eines rinnenartigen Bereichs (6) abgrenzt, und der rippenartige Vorsprung (8) einem Randbereich (10) des Gehäuses (4) mit einem Spalt (11) beabstandet gegenüberliegt, wobei außenseitig des Gehäuses (4) unterhalb des Spalts (11) der rinnenartige Bereich (6) angeordnet ist.

6. Deckel-Gehäuse-Anordnung nach Anspruch 4, **dadurch gekennzeichnet, dass** der Deckel (5) eine leichte Vertiefung (7) im Bereich des Filters (3) aufweist, wobei ein rippenartiger Vorsprung (8) die Vertiefung (7) bezüglich eines rinnenartigen Bereichs (6) abgrenzt, und der rippenartige Vorsprung (8) einem Randbereich (10) des Gehäuses (4) gegenüberliegt, wobei zwischen Vorsprung (8) und Randbereich (10) mindestens ein Durchbruch (11') vorgesehen ist, unterhalb dessen der rinnenartige Bereich (6) angeordnet ist.

7. Deckel-Gehäuse-Anordnung nach einem der Ansprüche 4 bis 6, **dadurch gekennzeichnet, dass** der Filter (3) von der Außenseite her von Luft durchströmbar ist, wobei der Übertrittsbereich (14) in unmittelbarer Nähe der äußeren unteren Filterkante angeordnet ist.

8. Deckel-Gehäuse-Anordnung nach einem der vorhergehenden Ansprüche, **dadurch gekennzeichnet, dass** im Dichtungsbereich (13) eine abdichtende Nut-Feder-Verbindung zwischen dem Deckel (5) und dem Gehäuse (4) ausgebildet ist.

## Claims

1. A cover-housing arrangement comprising a housing (4) and a cover (5) fitted on said housing, wherein a medium is dischargeable via the cover (5) from the interior of the housing (4), and the cover (5) is sealed in a sealing area (13) with respect to the housing (4), wherein the stealing area (13) is arranges spatially separated from the transfer area (14) of the medium from the housing (4) into the cover (5), **characterized in that**
of the cover (5), a channel-like area (6) is formed which conveys the medium and the outer rim of which rests against the housing (4) and, in confection with the housing (4), forms the sealing area (13), and the interval wall surface of which is arranged spaced apart from the housing (4) with a gap (11), wherein the gap (11) forms the transfer area (14) for the medium from the housing (4) into the convoying channel-like area (6).

2. The cover-housing arrangement according to claim 1, **characterized in that** the housing (4) has a rim area (10) which is adjacent to the sealing area (13), partially covers the channel-like area (6), and the end of which forms one side of the gap (11).

3. The cover-housing arrangement according to claim 1 or claim. 2, **characterized in that** the channel-like area (6) has a slight downward slope toward a drain (6').

4. The cover-housing arrangement according to any one of the preceding claim, **characterized in that** the cover-housing arrangement accommodates aft least one filter (3) which is arranged in the housing (4) which is closed from below with the cover (5), wherein the filter (3) is seated with a surface on the cover (5).

5. The cover-housing arrangement according to claim 4, **characterized in that** the cover (5) has a slight depression (7) in the area of the filter (3), wherein a rib-pike protection (8) borders the depression (7) with regard to a channel-like area (6), and the rib-like projection (8) is located apposite a rim area (10) of the housing (4) and spaced apart therefrom with a gap (11), wherein outside of the housing (4), the channel-like area (6) is arranged below the gap (11).

6. The cover-housing arrangement according to claim 4, **characterized in that** the cover (5) has a slight depression (7) in the area of the filter (3), wherein a rib-like protection (8) borders the depression (7) with regard to a channel-like area (6), and the rib-like projection (8) is located opposite a rim area (10) of the housing (4), wherein between the projection (8) and the rim area (10), at least one opening (11') is provided, beneath which opening, the channel-like area (6) is arranged.

7. The cover-housing arrangement according to any one of the claims 4 to 6, **characterized in that** air from the outside can flow through the filter (3), wherein the transfer area (14) is arranged in close proximity to the outer lower filter edge.

8. The cover-housing arrangement according to any one of the preceding claims, **characterized in that** in the sealing area (13), a sealing tongue and groove connection is formed between the cover (5) sand the housing (4).

## Revendications

1. Agencement d'un boîtier à couvercle comprenant un boîtier (4) ainsi qu'un couvercle (5) fixé sur le boîtier, agencement dans lequel peut être évacué un milieu sortant de l'intérieur du boîtier (4) via le couvercle (5), et le couvercle (5), dans une zone d'étanchéité (13), est rendu étanche par rapport au boîtier (4), où la zone d'étanchéité (13) est disposée en étant séparée spatialement de la zone de débordement (14) du milieu provenant du boîtier (4) et passant dans le couvercle (5),
**caractérisé en ce qu'**une zone (6) en forme de rigole et acheminant le milieu est configurée sur le couvercle (5), zone dont le bord extérieur est en appui sur le boîtier (4) et, en association avec le boîtier (4), forme la zone d'étanchéité (13), et zone dont la surface de paroi intérieure est disposée en étant espacée du boîtier (4) par un intervalle (11), où l'intervalle (11) forme la zone de débordement (14) pour le milieu sortant du boîtier (4) et passant dans la zone d'acheminement (6), en forme de rigole.

2. Agencement d'un boîtier à couvercle selon la revendication 1, **caractérisé en ce que** le boîtier (4) présente une zone de bordure (10) qui est contiguë à la zone d'étanchéité (13), recouvre partiellement la zone (6) en forme de rigole, l'extrémité de la zone de bordure formant un côté de l'intervalle (11).

3. Agencement d'un boîtier à couvercle selon la revendication 1 ou 2, **caractérisé en ce que** la zone (6) en forme de rigolé présente une légère déclivité en direction d'une sortie (6').

4. Agencement d'un boîtier à couvercle selon l'une quelconque des revendication précédentes, **caractérisé en ce que** l'agencement d'un boîtier à couvercle loge au moins un filtre (3) qui est disposé dans le boîtier (4) qui est obturé, du dessous, par le couvercle (5), où le filtre (3) est placé en ayant une face située sur le couvercle (5).

5. Agencement d'un boîtier à couvercle selon la revendication 4, **caractérisé en ce que** le couvercle (5) présente, dans la zone du filtre (3), une légère cavité (7), où une partie saillante (8) en forme d'ailette délimite la cavité (7) par rapport à une zone (6) en forme de rigole, et la partie saillante (8) en forme d'ailette fait face à une zone de bordure (10) du boîtier (4) en étant espacée par un intervalle (11), où la zone (6) en forme de rigole est disposée à l'extérieur du boîtier (4), au-dessous de l'intervalle (11).

6. Agencement d'un boîtier à couvercle selon la revendication 4, **caractérisé en ce que** le couvercle (5) présente, dans la zone du filtre (3), une légère cavité (7), où une partie saillante (8) en forme d'ailette délimite la cavité (7) par rapport à une zone (6) en forme de rigole, et la partie saillante (8) en forme d'ailette fait face à une zone de bordure (10) du boîtier (4), où il est prévu au moins un passade (11') entre la partie saillante (8) et la zone de bordure (10), passage au-dessous auquel est disposée la zone (6) en forme de rigole.

7. Agencement d'un boîtier à couvercle selon l'une quelconque des revendications 4 à 6, **caractérisé en ce que** le filtre (3) peut, de l'extérieur, être traversé par de l'air, où la zone de débordement (14) est disposée à proximité immédiate du bord inférieur extérieur du filtre.

8. Agencement d'un boîtier à couvercle selon l'une quelconque des revendication précédentes, **caractérisé en ce qu'**un assemblage assurant l'étanchéité et réalisé par emboîtement mâle / femelle entre le couvercle (5) et le boîtier (4) est configuré dans la zone d'étanchéité (13).
